# EUROPÄISCHE PATENTSCHRIFT

(11) **EP 2 789 503 B1**
(45) Veröffentlichungstag und Bekanntmachung des Hinweises auf die Patenterteilung: **08.02.2017**
(21) Anmeldenummer: 14157641.3
(22) Anmeldetag: 04.03.2014
(51) Int. Cl.: B60Q 1/076

(54) **Einstelleinrichtung für Fahrzeugscheinwerfer**
Adjusting device for vehicle headlamp
Dispositif de réglage de phares de véhicule

(30) Priorität: 11.04.2013 AT 502502013
(43) Veröffentlichungstag der Anmeldung: 15.10.2014
(73) Patentinhaber: ZKW Group GmbH, 3250 Wieselburg (AT)
(72) Erfinder: Baminger, Peter, 3241 Kirnberg (AT)
(74) Vertreter: Patentanwaltskanzlei Matschnig & Forsthuber OG

(56) Entgegenhaltungen:
- EP-A2- 2 557 358
- WO-A1-2012/098142
- DE-A1- 10 003 929
- US-A- 5 099 400
- US-A1- 2003 174 508

## Beschreibung

Die Erfindung betrifft eine Einstelleinrichtung für einen Scheinwerfer, insbesondere einen Kraftfahrzeugscheinwerfer, zum Verschwenken einer einstellbaren Komponente des Scheinwerfers, wobei die einstellbare Komponente in einem um eine Stellachse verschwenkbar gelagerten Träger gehalten ist, und wobei die Einstelleinrichtung einen Antrieb und ein durch den Antrieb betätigbares Getriebe aufweist, das zumindest ein Getriebeelement zum Verstellen der Orientierung des Trägers umfasst. Die einstellbare Komponente des Scheinwerfers kann insbesondere eine Leuchteinheit, ein Reflektor, eine Linse, ein vollständiges Lichtmodul oder (allgemeiner) jegliche lichtformende Komponente des Scheinwerfers sein. Gleichfalls betrifft die Erfindung einen Scheinwerfer, insbesondere einen Kraftfahrzeugscheinwerfer, mit einer Einstelleinrichtung dieser Art.

Einstelleinrichtungen und diese enthaltende Fahrzeugscheinwerfer sind aus dem Stand der Technik wohlbekannt. Die Verschwenkbarkeit dient beispielsweise zum Einstellen einer Leuchtweite des Schweinwerfers. So ist in EP 1491400 A2 ein Scheinwerfer beschrieben, der eine Stelleinrichtung zur Verstellung des Reflektors des Scheinwerfers mithilfe eines über einen Motor angetriebenen Hebelgetriebes aufweist.

Wird das Einstellsystem eines Kraftfahrzeugscheinwerfers durch ein System, das einen eine insbesondere lineare Bewegung ausführenden Antriebsmotor beinhaltet, umgesetzt, treten im Allgemeinen mehrere Probleme auf. Zum einen müssen bei der Umwandlung der linearen Bewegung in die Drehbewegung des zu verstellenden Bauteils mittels eines einfachen Hebels verschiedene Kompromisse eingegangen werden. Die begrenzte Stellkraft und Weggenauigkeit des Antriebmotors bedingen eine gewisse Hebellänge, wobei die Unzulänglichkeiten von Stellkraft und Weggenauigkeit umso besser ausgeglichen werden, je länger der Hebelarm, an dem der Antriebsmotor wirkt, ausgestaltet ist. Die Länge des Hebelarms wiederum ist durch die mit zunehmender Hebellänge sinkende Verstell(winkel)geschwindigkeit des zu verstellenden Bauteils und durch den zur Verfügung stehenden Bauraum, der durch die immer umfangreicheren Funktionen eines Kraftfahrzeugscheinwerfers immer geringer wird, beschränkt. Zudem ist es konstruktiv bedingt oft nicht möglich, den Schwerpunkt des zu verstellenden Bauteils und die Achse, um die dieses verschwenkt wird, zusammenfallen zu lassen, was durch im Betrieb unvermeidlich auftretende Schwingungen zu einer ungünstigen Mehrbelastung der Verstellmechanik führt. Um das Schwingungsverhalten der Verstellmechanik zu verbessern, wäre es daher gewünscht, die Schwenkachse des Hebels (Getriebeelements) durch den Schwerpunkt des einstellbaren Lichtmoduls oder zumindest möglichst nahe dem Schwerpunkt zu führen. Zudem soll die Verstellmechanik so ausgeführt sein, dass die mechanischen Belastungen der einzelnen Bauteile so gering wie möglich gehalten werden, um zuverlässige und dauerhafte Funktionalität zu gewährleisten.

Eine gattungsgemäße Einstelleinrichtung ist aus WO 2012/098142 bekannt.

Es ist daher eine Aufgabe der vorliegenden Erfindung, die Mechanik einer Einstelleinrichtung zu verbessern, um die genannten Nachteile zu beseitigen. Im Besonderen soll die Einstelleinrichtung bei verbesserter Schrittauflösung des Antriebs eine Verringerung des Platzbedarfs der bewegten Bauteile ermöglichen, und eine hohe Stabilität hinsichtlich des Schwingungsverhaltens bieten.

Diese Aufgabe wird von einer Einstelleinrichtung der eingangs genannten Art gelöst, bei welcher erfindungsgemäß das Getriebe der Einstelleinrichtung zumindest zwei Getriebeelemente aufweist, die durch den Antrieb über das Getriebe gemeinsam betätigt sind; hierbei ist jedes Getriebeelement an je einer Betätigungsstelle mit dem Träger getriebemäßig verbunden ist, wobei diese Betätigungsstellen in Bezug auf die Stellachse einander gegenüber liegen und die Getriebeelemente an den Betätigungsstellen gegenläufige Bewegungen (genauer: Ortsänderungen) des Trägers bewirken. Mit anderen Worten, die Getriebeelemente führen infolge der Einstellbewegung, die durch den Antrieb hervorgerufen wird, an den Betätigungsstellen Verschiebungsbewegungen in entgegengesetzte Richtungen aus. Dadurch ergibt sich eine Verdoppelung der Bewegung des Trägers und somit der einstellbaren Komponente. Dies wiederum ermöglicht eine entsprechende Verkleinerung der Dimensionierung des Getriebeelements.

Das Getriebe der Einstelleinrichtung kann auf verschiedene Art realisiert sein, beispielsweise als Koppelgetriebe und/oder mithilfe eines Zahnradgetriebes.

In einer bevorzugten Ausgestaltung der erfindungsgemäßen Lösung sind in dem Getriebe die Getriebeelemente Hebelglieder, die über Koppelgelenke an den Betätigungsstellen mit dem Träger gelenkig verbunden sind. In einer bevorzugten Ausgestaltung können die Koppelgelenke als Drehgelenke ausgebildet sein.

Außerdem ist es vorteilhaft, beispielsweise im Falle eines Koppelgetriebes, wenn die Getriebeelemente um jeweils eigene Kippachsen verschwenkbar gelagerte Hebelglieder sind, wobei die Kippachsen parallel verlaufen, bevorzugt parallel zur Stellachse, und in Bezug auf die Stellachse einander gegenüber liegen. Durch diese symmetrische Anordnung um die Stellachse, bei der die Trägheitswirkung der Getriebeelemente gegeneinander kompensiert ist, ist die Mechanik nur wenig anfällig gegenüber Schwingungsbewegungen.

Um für eine gemeinsame Bewegung der Hebelglieder bei der Einstellbewegung zu sorgen, kann es zweckmäßig sein, wenn die Hebelglieder durch ein Jochstück, beispielsweise in Form einer exzentrisch zur Stellachse verlaufenden Distanzstange, über jeweils gelenkige Verbindungen verkoppelt sind. Dies ermöglicht eine Stellmechanik mit gegenüber herkömmlichen Systemen verkürzten Schwenkhebeln gegenüber einem herkömmlichen System mit gleicher Schrittauflösung.

Die Betätigungsstellen können beispielsweise Drehgelenkslager mit vorzugsweise zueinander parallelen Gelenksachsen sein. Eine Variante hierzu sind Kugelgelenke. Anstelle von Ausführungen, in denen die Getriebe als Koppelgetriebe mit Drehgelenken und/oder Kugelgelenken ausgebildet sind, können jedoch auch andere Arten des Getriebes eingesetzt werden; so können für einzelne Getriebeverbindungen auch andere Eingriffsarten, wie z.B. mithilfe von Zahnrädern/Zahnstangen oder Schraubgetrieben, verwendet werden. Beispielsweise kann das Getriebe als Zahnradgetriebe ausgeführt sein, worin die Getriebeelemente um jeweils eigene Kippachsen verschwenkbar gelagerte Hebelglieder sind und Zahnradbereiche aufweisen, die mittels eines Zahnradgetriebe miteinander verkoppelt sind, wobei die Kippachsen parallel verlaufen und in Bezug auf die Stellachse einander gegenüber liegen.

Insbesondere in dem Fall, dass genau zwei Getriebeelemente (z.B. Hebelglieder) vorgesehen sind, um den Träger zu verstellen, kann der Antrieb mit einem ersten der Getriebeelemente getriebemäßig verbunden sein; das erste Getriebeelement ist dann getriebemäßig über ein Jochgetriebe mit dem zweiten Getriebeelement verbunden ist, wobei das Jochgetriebe eine gleichzeitige und gegenläufige Bewegung der Getriebeelemente in der bereits dargestellten Art sicherstellt.

Ebenso wird die oben gestellte Aufgabe durch einen Scheinwerfer, insbesondere Kraftfahrzeugscheinwerfer, mit einer Einstelleinrichtung der vorangehend beschriebenen Art sowie deren besonderen Weiterbildungen gelöst.

Die Erfindung samt weiterer Vorzüge und Einzelheiten wird im Folgenden anhand von beispielhaften und nicht einschränkenden Ausführungsformen näher erläutert, die in den beigefügten Zeichnungen dargestellt sind. Darin zeigt:
- Fig. 1: eine perspektivische Ansicht eines Scheinwerfers mit einer Einstelleinrichtung für die Linse / Leuchteinheit des Scheinwerfers mit einer Hebelmechanik gemäß einer ersten Ausführungsform der Erfindung;
- Fig. 2: den Scheinwerfer und die Einstelleinrichtung der Fig. 1 in einer weiteren perspektivischen Ansicht bei abgenommener Rahmenkonstruktion;
- Fig. 3: eine Seitenansicht auf den Scheinwerfer der Fig. 1 und 2, worin die Einstelleinrichtung sichtbar ist;
- Fig. 4a und 4b: die Einstelleinrichtung der Fig. 3 in jeweils entgegen gesetzt ausgelenkten Stellungen der Einstellmechanik;
- Fig. 5: eine Explosionsdarstellung des Scheinwerfers und der Einstelleinrichtung der Fig. 1 bis 4b; und
- Fig. 6: eine zweite Ausführungsform einer Einstelleinrichtung mit einer Zahnradmechanik.

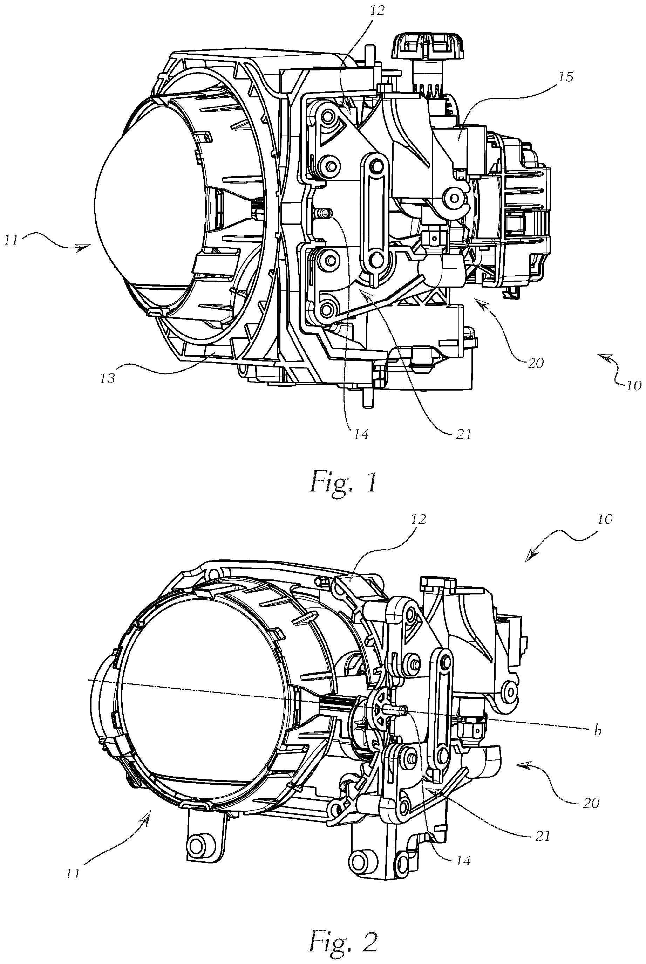

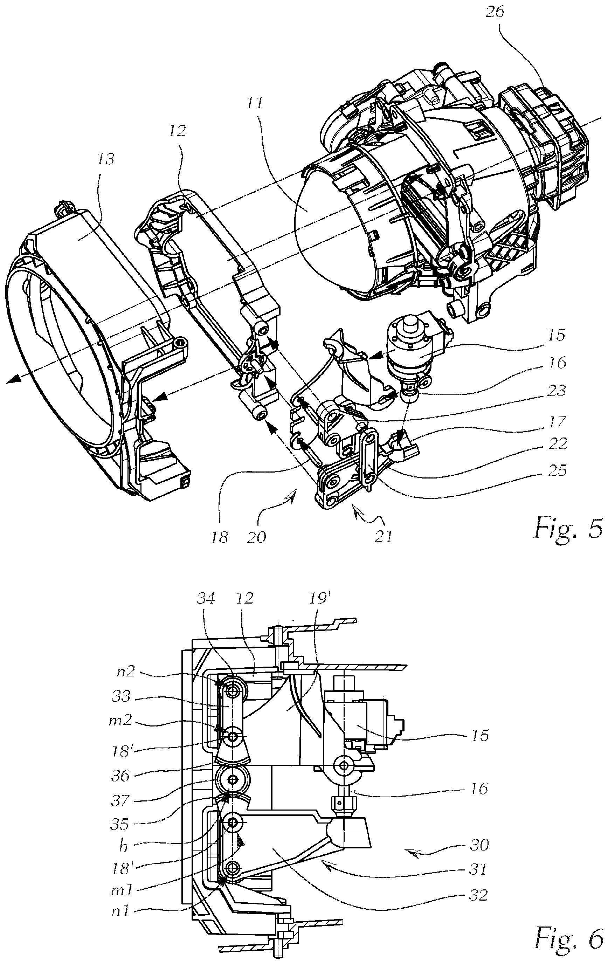

Bezugnehmend auf Fig. 1 und 2 ist ein Scheinwerfer in je einer perspektivischen Ansicht mit eröffnetem Gehäuse gezeigt. In dem Scheinwerfer ist eine Linse 11 in einem Träger 12 gehalten. Die Linse 11 stellt eine lichtformende Komponente dar und ist zusammen mit dem Träger 12 innerhalb einer Rahmenkonstruktion 13 (Fig. 1), die beispielsweise ein Teil des Scheinwerfergehäuses und mit diesem fest verbunden ist, um eine Stellachse h verschwenkbar; diese stellt im Ausführungsbeispiel eine einstellbare Komponente im Sinne der Erfindung dar. Der einstellbaren Komponente kann gegebenenfalls auch eine lichterzeugende Einrichtung wie etwa eine Scheinwerferlampe 26 (Fig. 5) angehören (Leuchteinheit). In Fig. 2 ist die Rahmenkonstruktion 13 nicht gezeigt, damit der Träger 12 besser sichtbar ist. Fig. 5 zeigt zusätzlich eine explodierte Darstellung der Komponenten des Scheinwerfers. Die Linse 11 ist in der gezeigten Ausführungsform starr in dem Träger 12 gehalten und wird durch diesen um die Stellachse h verschwenkt, könnte aber in einer (nicht dargestellten) Variante in dem Träger zusätzlich drehbar gelagert sein, beispielsweise um eine Verschwenkung der Linse um eine weitere Achse zu ermöglichen, oder mit anderen (nicht dargestellten) Mitteln zum Erzeugen eines Kurvenlichts ausgestattet sein.

Die Stellachse h liegt beispielsweise horizontal, um einen Neigungswinkel gemäß einer Nickbewegung der Scheinwerferlinse einstellen zu können; dies gestattet z.B. das Einstellen einer Leuchtweitenregelung. Jedoch kann in anderen Ausführungsformen die Stellachse anders ausgerichtet sein, beispielsweise vertikal, sodass ein seitliches Verschwenken der Scheinwerferlinse stattfinden kann. Die Stellachse h ist beispielsweise durch ein Paar von in der Rahmenkonstruktion vorgesehenen Zapfen 14 realisiert, die in Bezug auf die Rahmenkonstruktion ortsfest (starr) angeordnet sind und auf denen der Träger 12 drehbar gelagert ist. In Fig. 1 und 2 ist nur einer der beiden Zapfen 14 sichtbar, der zweite liegt spiegelbildlich auf der dem Betrachter abgewandten Seite.

Zum Verstellen des Winkels um die Achse h ist eine Einstelleinrichtung 20 vorgesehen, die an einer Seite der Rahmenkonstruktion 13 angeordnet ist. Die Einstelleinrichtung 20 wird von einem als Antrieb dienenden Schrittmotor 15 betätigt und enthält ein Getriebe 21, beispielsweise ein Koppelgetriebe, das die Bewegung des Schrittmotors 15 in eine Schwenkbewegung des Trägers 12 und somit des Lichtmoduls (Linse 11) umsetzt.

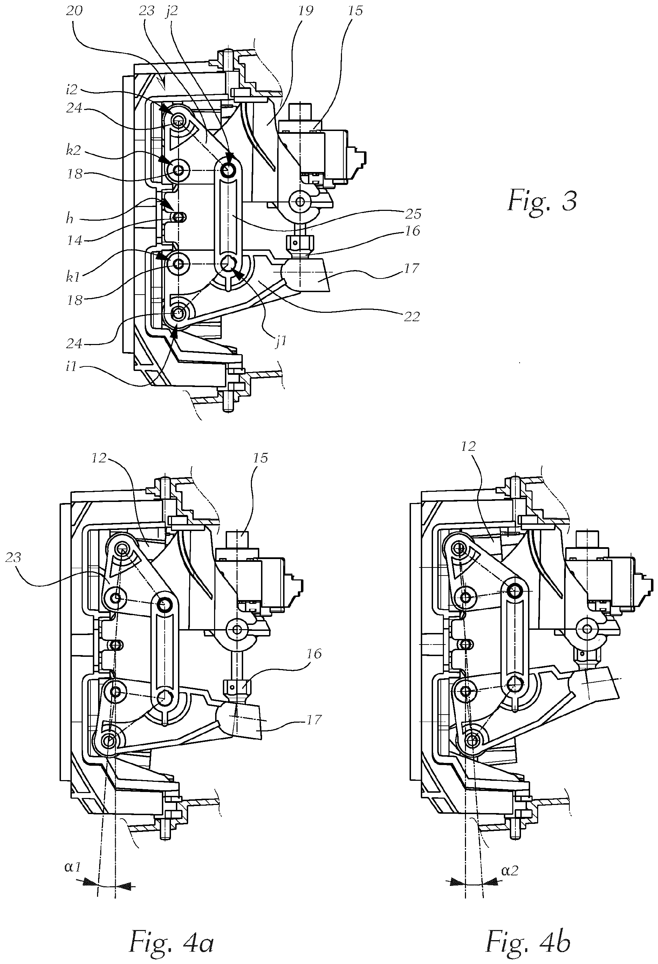

Fig. 3 zeigt die Komponenten der Einstelleinrichtung 20, die in dieser Ausführungsform als Koppelgetriebe 21 ausgebildet ist, in einer Ansicht auf die Seite des Scheinwerfers. Der Schrittmotor 15 ist ein Linearmotor, der einen z.B. vertikal verlaufenden Läufer 16 auslenkt. Ein Ende des Läufers 16 ist über ein Gelenk 17, z.B. Kugelgelenk, mit einem ersten Kipphebel 22 verbunden, um die Bewegung des Motors auf das Getriebe 21 zu übertragen. Ein zweiter Kipphebel 23 befindet sich dem Kipphebel 22 gegenüber liegend in Bezug auf die Achse h. Jeder Kipphebel 22, 23 ist auf einem Lagerstift 18 drehbar gelagert und kann somit um die Achse k1, k2 ("Kippachse"), die jeweils durch den Lagerstift definiert wird, verkippt werden. Die Lagerstifte 18 sind auf einer Lagerplatte 19 montiert, die starr mit der Rahmenkonstruktion 13 verbunden ist. Die Lagerstifte 18 und somit die zugeordneten Kippachsen k1, k2 sind außerhalb der Achse h und in Bezug auf diese einander diametral gegenüber positioniert. Die Kipphebel 22, 23 erstrecken sich von dem Gelenk, das mit den Lagerstiften 18 gebildet ist, nach außen und weisen jeweils an einer äußeren Verbindungsstelle i1, i2 eine gelenkige Verbindung mit dem Träger 12 auf, beispielsweise eine Drehgelenkverbindung mithilfe je eines Zapfen 24 des Trägers 12, der die Verbindungsstelle in dem jeweiligen Kipphebel 22, 23 durchsetzt. Die durch die Zapfen 24 beiderseits der Achse h gebildeten Gelenke i1, i2 entsprechen den Betätigungsstellen der Erfindung.

Die Kipphebel 22, 23 realisieren Getriebeelemente der erfindungsgemäßen Einstellmechanik 21, die mit dem Träger 12 an je einer zu der Stellachse h exzentrischen Betätigungsstelle i1, i2 getriebemäßig verbunden sind; sie sind zudem einzeln drehbar gelagert, jedoch aufgrund des Antriebs des Motors 15 nur gemeinsam bewegbar sind.

Die beiden Kipphebel 22, 23 sind über eine als Jochstück dienende Distanzstange 25 aneinander gekoppelt, nämlich über Gelenkstellen j1, j2, die ebenfalls als Drehzapfengelenke ausgebildet sein können. Die Distanzstange 25 verläuft (im Sinne der Linie j1 - j2) in einem Abstand zur Achse h, beispielsweise entlang in vertikaler Richtung. Aufgrund der Kopplung durch das Jochstück ist dafür gesorgt, dass die Kipphebel 22, 23 die von dem Schrittmotor 15 aufgeprägte Auslenkungsbewegung nur gemeinsam durchführen können, und zwar in einer Weise, dass die Bewegung der Kipphebel gegenläufig erfolgt: Wenn der eine Kipphebel nach rechts verkippt wird, wird der andere Kipphebel um das gleiche Ausmaß nach links verkippt, und umgekehrt.

Fig. 4a und 4b illustrieren die Auslenkung des Trägers 12 in zwei beispielhaften Endstellungen mit entgegen gesetzten Auslenkungswinkeln. In Fig. 4a ist der Träger 12 um einen Winkel α1 = 4° (positive Winkel bezeichnen hier ein Kippen nach oben) gekippt. Der Kipphebel 22 ist um einen Winkel von ca. 8° um seine Nulllage verkippt. In Fig. 4b ist der Träger in der entgegengesetzten Richtung gekippt, mit einem Winkel von α2 = -4°, infolge eines Kippwinkels des Kipphebels 22 um einen Winkel von ca. -8° gegenüber der Nulllage. Die Winkelverhältnisse von 1 : 2 ergeben sich dadurch, dass der Abstand der Drehachse k1, k2 jedes Kipphebels 22, 23 von der Stellachse h des Trägers 12 im Wesentlichen gleich der wirksamen Länge der Kipphebel 22, 23 (d.h. der Abstand der Gelenksachsen k1 - i1 bzw. k2 - i2) ist. Somit ermöglicht die hier gezeigte Ausführungsform einer erfindungsgemäßen Einstelleinrichtung einen gesamten Winkelbereich von α1-α2 = 8° des Trägers 12 bei verkürztem (im gezeigten Fall halbiertem) Antriebsweg am Ort des Schrittmotors (Gelenk 17) und insgesamt verringertem Platzbedarf der Hebelkonstruktion, bei gleicher Schrittauflösung im Gegensatz zur Verwendung eines einfachen Hebels herkömmlicher Art. Die hier genannten Beträge der Winkel sind lediglich beispielhaft; je nach Ausführungsform und Anwendung können die möglichen Endwinkel des Trägers andere Werte annehmen. In anderen Verwirklichungen der Erfindung könnten die Hebel- und/oder Winkelverhältnisse umgekehrt sein, wodurch der erforderliche Antriebsweg verkleinert und dem entsprechend die Schrittauflösung hinsichtlich der Schrittweite des Motors vergrößert würde. Die Erfindung gestattet somit eine flexiblere Wahl der Antriebslänge in Bezug auf den geforderten Einstellbereich.

Aufgrund der erfindungsgemäß gegenläufigen Bewegung der Kipphebel 22, 23 ergibt sich, dass eine Stellbewegung des Motors 15 eine gegenläufige Auslenkung der beiden Betätigungsstellen i1, i2 und somit ein Verkippen des Trägers 12 und somit des Lichtmoduls (Linse 11) um die Stellachse h hervorruft. Auf diese Weise führt die erfindungsgemäße Konstruktion des der Einstelleinrichtung 20 durch die Verwendung von zwei symmetrisch angeordneten Kipphebeln 22, 23 (anstelle eines einzelnen Kipphebels bei herkömmlichen Lösungen) zu einer verbesserten Winkelauflösung der Kipphebel, nämlich wegen der Untersetzung durch die erfindungsgemäße Hebelmechanik, und zugleich zu einer Erhöhung der Stabilität der Einstelleinrichtung. Der Platzbedarf für die Kipphebel 22, 23 und die Einstelleinrichtung 20 insgesamt wird durch die spezielle Bauteilanordnung und senkrechte Anordnung des Schrittmotors 15, der hier zum Antrieb der Leuchtweitenregelung eingesetzt wird, optimiert.

Die Gelenke i1, j1, k1, i2, j2, k2 des Koppelgetriebes 21 sind in dem gezeigten Ausführungsbeispiel als Drehgelenke um jeweilige Gelenksachsen ausgeführt. Selbstverständlich sind auch andere Ausführungen, z.B. durch Kugelgelenke, möglich.

In Fig. 6 ist eine andere Ausführung der Erfindung gezeigt, worin eine erfindungsgemäße Einstelleinrichtung 30 mithilfe eines Zahnradgetriebes 31 ausgeführt ist. Die Ansicht der Fig. 6 entspricht jener der Fig. 3; soweit im Folgenden nicht anders beschrieben ist, entspricht diese Ausführungsform der vorangehend beschriebenen. Der Läufer 16 des Schrittmotors 15 ist über ein Gelenk (z.B. Kugelgelenk) mit einem ersten Kipphebel 32 verbunden. Ein zweiter Kipphebel 33 befindet sich dem Kipphebel 32 gegenüber liegend in Bezug auf die Achse h. Jeder Kipphebel 32, 33 ist auf einem Lagerstift 18' drehbar gelagert und kann somit um die Kippachsen m1, m2, die jeweils durch den Lagerstift definiert wird, verkippt werden. Die Lagerstifte 18' sind auf der Lagerplatte 19' montiert; auch hier sind die Kippachsen m1, m2 außerhalb der Achse h und in Bezug auf diese einander diametral gegenüber positioniert.

Die Kipphebel 32, 33 erstrecken sich von dem Gelenk, das mit den Lagerstiften 18' gebildet ist, nach außen, wobei jeweils an einer äußeren Verbindungsstelle n1, n2 eine gelenkige Verbindung mit dem Träger 12 hergestellt ist, beispielsweise eine Drehgelenkverbindung mithilfe je eines Zapfens 34, der die Verbindungsstelle in dem jeweiligen Kipphebel 32, 33 durchsetzt. Die durch die Zapfen 34 beiderseits der Achse h gebildeten Gelenke n1, n2 dieses Ausführungsbeispiels entsprechen wiederum den Betätigungsstellen der Erfindung.

Die Kipphebel 32, 33 realisieren Getriebeelemente der Einstellmechanik 31, die mit dem Träger 12 an je einer zu der Stellachse h exzentrischen Betätigungsstelle n1, n2 getriebemäßig verbunden sind; sie sind zudem einzeln drehbar gelagert, jedoch aufgrund des Antriebs des Motors 15 nur gemeinsam bewegbar.

Die beiden Kipphebel 32, 33 weisen zur Achse h hin orientiert Zahnradsektoren 35, 36 auf, die über ein Jochzahnrad 37 miteinander zahngetriebemäßig verkoppelt sind. Das Zahnrad 37 ist beispielsweise zentral positioniert, auf der Achse h drehbar gelagert. Aufgrund der Kopplung durch das Zahnrad 37 ist dafür gesorgt, dass die Kipphebel 32, 33 die von dem Schrittmotor 15 aufgeprägte Auslenkungsbewegung nur gemeinsam durchführen können, jedoch wiederum nur mit gegenläufiger Bewegung der Kipphebel: Wenn der eine Kipphebel nach rechts verkippt wird, wird der andere Kipphebel um das gleiche Ausmaß nach links verkippt, und umgekehrt.

Selbstverständlich ist die Erfindung nicht auf die beschriebenen Ausführungsbeispiele und darin gezeigten Komponenten beschränkt; vielmehr sind vielerlei Abwandlungen und Ergänzungen möglich und für den Fachmann unmittelbar einleuchtend. Insbesondere kann anstelle (oder zusammen mit) einer Linse oder einer Leuchteinheit mit Linse jegliche lichtformende Komponente eines Scheinwerfers durch die erfindungsgemäße Einstelleinrichtung verschwenkt werden. Auch sind weitere Alternativen des Getriebes denkbar, z.B. mit einem Schneckengetriebe oder Riemengetriebe.

## Patentansprüche

1. Einstelleinrichtung (20, 30) für einen Scheinwerfer, insbesondere einen Kraftfahrzeugscheinwerfer, zum Verschwenken einer einstellbaren Komponente (11) des Scheinwerfers, insbesondere einer Linse, Leuchteinheit oder anderen lichtformenden Komponente des Scheinwerfers, wobei die einstellbare Komponente (11) in einem um eine Stellachse (h) auf einer Rahmenkonstruktion (13) verschwenkbar gelagerten Träger (12) gehalten ist, wobei die Einstelleinrichtung (20, 30) einen Antrieb (15) und ein durch den Antrieb betätigbares Getriebe (21, 31) aufweist, das zumindest ein Getriebeelement zum Verstellen der Orientierung des Trägers (12) umfasst, wobei das Getriebe (21, 31) zumindest zwei Getriebeelemente (22, 23, 32, 33) aufweist, die durch den Antrieb (15) über das Getriebe (21, 31) gemeinsam betätigt sind,
**dadurch gekennzeichnet, dass**
jedes Getriebeelement an je einer Betätigungsstelle (i1, i2, n1, n2) mit dem Träger (12) getriebemäßig verbunden ist, wobei die Betätigungsstellen (i1, i2, n1, n2) der Getriebeelemente (22, 23, 32, 33) in Bezug auf die Stellachse (h) einander gegenüber liegen und die Getriebeelemente (22, 23, 32, 33) gegenläufige Ortsänderungen der Betätigungsstellen (i1, i2, n1, n2) bewirken.

2. Einstelleinrichtung nach Anspruch 1, **dadurch gekennzeichnet, dass** in dem Getriebe (21, 31) die Getriebeelemente (22, 23, 32, 33) Hebelglieder sind, die über Koppelgelenke an den Betätigungsstellen (i1, i2, n1, n2) mit dem Träger (12) gelenkig verbunden sind.

3. Einstelleinrichtung nach Anspruch 2, **dadurch gekennzeichnet, dass** die Koppelgelenke Drehgelenke sind.

4. Einstelleinrichtung nach einem der Ansprüche 1 bis 3, **dadurch gekennzeichnet, dass** das Getriebe (21) als Koppelgetriebe ausgeführt ist, worin die Getriebeelemente (22, 23) um jeweils eigene Kippachsen (k1, k2) verschwenkbar gelagerte Hebelglieder sind, wobei die Kippachsen (k1, k2) parallel verlaufen und in Bezug auf die Stellachse (h) einander gegenüber liegen.

5. Einstelleinrichtung nach Anspruch 4, **dadurch gekennzeichnet, dass** die Hebelglieder (22, 23) durch ein Jochstück (25) über jeweils gelenkige Verbindungen verkoppelt sind.

6. Einstelleinrichtung nach einem der Ansprüche 1 bis 3, **dadurch gekennzeichnet, dass** das Getriebe (31) als Zahnradgetriebe ausgeführt ist, worin die Getriebeelemente (32, 33) um jeweils eigene Kippachsen (m1, m2) verschwenkbar gelagerte Hebelglieder sind und Zahnradbereiche (35, 36) aufweisen, die mittels eines Zahnradgetriebe miteinander verkoppelt sind, wobei die Kippachsen (m1, m2) parallel verlaufen und in Bezug auf die Stellachse (h) einander gegenüber liegen.

7. Einstelleinrichtung nach einem der vorhergehenden Ansprüche, **dadurch gekennzeichnet, dass** die Betätigungsstellen Drehgelenkslager mit vorzugsweise zueinander parallelen Gelenksachsen sind.

8. Einstelleinrichtung nach einem der vorhergehenden Ansprüche, **dadurch gekennzeichnet, dass** der Antrieb (15) mit einem ersten der Getriebeelemente (22, 32) getriebemäßig verbunden ist und das erste Getriebeelement (22, 32) getriebemäßig über ein Jochgetriebe (25, 37) mit dem zweiten Getriebeelement (23, 33) verbunden ist, wobei das Jochgetriebe eine gleichzeitige und gegenläufige Bewegung der Getriebeelemente sicherstellt.

9. Scheinwerfer (10), insbesondere einen Kraftfahrzeugscheinwerfer, mit einer Einstelleinrichtung (20) zum Verschwenken einer einstellbaren Komponente (11) des Scheinwerfers, insbesondere einer Linse, Leuchteinheit oder anderen lichtformenden Komponente des Scheinwerfers, nach einem der vorhergehenden Ansprüche.

## Claims

1. An adjusting device (20, 30) for a headlight, especially a motor vehicle headlight, for pivoting an adjustable component (11) of the headlight, especially lens, lighting unit, or other light-forming component of the headlight, wherein the adjustable component (11) is retained in a carrier (12) borne pivotable about an adjusting axis (h) on a frame structure (13), wherein the adjusting device (20, 30) has a drive (15) and a gearing (21, 31) that may be actuated by the drive and that comprises at least one gear element for shifting the orientation of the carrier (12), wherein the gearing (21, 31) has at least two gear elements (22, 23, 32, 33) that are jointly actuated by the drive (15) via the gearing (21, 31),
**characterized in that**
each gear element is connected like a gear to the carrier (12) at an actuation site (i1, i2, n1, n2), wherein the actuation sites (i1, i2, n1, n2) of the gear elements (22, 23, 32, 33) oppose one another with respect to the adjusting axis (h) and the gear elements (22, 23, 32, 33) cause mutual changes in location of the actuating sites (i1, i2, n1, n2).

2. The adjusting device according to claim 1, **characterized in that** in the gearing (21, 31) the gear elements (22, 23, 32, 33) are lever members that are jointed with the carrier (12) via coupling joints at the actuation sites (i1, i2, n1, n2).

3. The adjusting device according to claim 2, **characterized in that** the coupling joints are swivel joints.

4. The adjusting device according to any of claims 1 through 3, **characterized in that** the gearing (21) is embodied as a coupled gear, wherein the gear elements (22, 23) are each lever members borne pivotable about discrete tilt axes (k1, k2), the tilt axes (k1, k2) running parallel to and opposing one another relative to the adjusting axis (h).

5. The adjusting device according to claim 4, **characterized in that** the lever members (22, 23) are coupled by a bridging part (25) via articulated connections.

6. The adjusting device according to any of claims 1 through 3, **characterized in that** the gearing (31) is embodied as a toothed gear, wherein the gear elements (32, 33) are each lever members borne pivotable about discrete tilt axes (m1, m2) and have toothed wheel regions (35, 36) that are coupled to one another by means of a toothed gear, the tilt axes (m1, m2) running parallel to and opposing one another relative to the adjusting axis (h).

7. The adjusting device according to any of the foregoing claims, **characterized in that** the actuation sites are swivel joint bearings having preferably mutually parallel joint axes.

8. The adjusting device according to any of the foregoing claims, **characterized in that** the drive (15) is connected like a gear to a first gear element (22, 32) and the first gear element (22, 32) is connected like a gear to the second gear element (23, 33) via a bridging part (25, 37), the bridging part ensuring simultaneous and opposing movement of the gear elements.

9. A headlight (10), especially a motor vehicle headlight, having an adjusting device (20) for pivoting an adjustable component (11) of the headlight, especially a lens, lighting unit, or other light-forming component of the headlight, according to one of the preceding claims.

## Revendications

1. Dispositif de réglage (20, 30) pour un phare, en particulier un phare de véhicule automobile, pour le pivotement d'un composant réglable (11) du phare, en particulier d'une lentille, d'une unité d'éclairage ou autres composants modeleurs de lumière du phare, où le composant réglable (11) est maintenu dans un support (12) monté pivotable autour d'un axe de réglage (h) sur une construction de cadre (13), où le dispositif de réglage (20, 30) présente un entraînement (15) et une transmission (21, 31) actionnable par l'entraînement, qui comprend au moins un élément de transmission pour le réglage de l'orientation du support (12), où la transmission (21, 31) présente au moins deux éléments de transmission (22, 23, 32, 33), qui sont actionnés conjointement par l'entraînement (15) par l'intermédiaire de la transmission (21, 31),
**caractérisé par le fait que**
chaque élément de transmission est relié par transmission avec le support (12) à un emplacement d'actionnement respectif (il, i2, n1, n2), où les emplacements d'actionnement (i1, i2, n1, n2) des éléments de transmission (22, 23, 32, 33) se situent opposés entre eux par rapport à l'axe de réglage (h) et les éléments de transmission (22, 23, 32, 33) provoquent des modifications de position opposées des emplacements d'actionnement (i1, i2, n1, n2).

2. Dispositif de réglage selon la revendication 1, **caractérisé par le fait que,** dans la transmission (21, 31), les éléments de transmission (22, 23, 32, 33) sont des éléments de levier, qui sont reliés de manière articulée avec le support (12) par l'intermédiaire d'articulations de couplage aux emplacements d'actionnement (i1, i2, n1, n2).

3. Dispositif de réglage selon la revendication 2, **caractérisé par le fait que** les articulations de couplage sont des articulations tournantes.

4. Dispositif de réglage selon l'une des revendications 1 à 3, **caractérisé par le fait que** la transmission (21) est réalisée sous la forme d'une transmission de couplage, où les éléments de transmission (22, 23) sont des éléments de levier montés pivotables autour de chaque axe de basculement propre (k1, k2), les axes de basculement (k1, k2) s'étendant parallèlement et se situant opposés entre eux par rapport à l'axe de réglage (h).

5. Dispositif de réglage selon la revendication 4, **caractérisé par le fait que** les éléments de levier (22, 23) sont couplés par une pièce d'étrier (25) par l'intermédiaire de liaisons articulées respectives.

6. Dispositif de réglage selon l'une des revendications 1 à 3, **caractérisé par le fait que** la transmission (31) est réalisée sous la forme d'une transmission à roue dentée, où les éléments de transmission (32, 33) sont des éléments de levier montés pivotables autour de chaque axe de basculement propre (m1, m2) et présentent des zones de roue dentée (35, 36), qui au moyen d'une transmission à roue dentée sont couplées entre elles, les axes de basculement (m1, m2) s'étendant parallèlement et se situant opposés entre eux par rapport à l'axe de réglage (h).

7. Dispositif de réglage selon l'une des revendications précédentes, **caractérisé par le fait que** les emplacements d'actionnement sont des paliers à articulation tournante ayant des axes d'articulation de préférence parallèles entre eux.

8. Dispositif de réglage selon l'une des revendications précédentes, **caractérisé par le fait que** l'entraînement (15) est relié par transmission avec un premier des éléments de transmission (22, 32) et le premier élément de transmission (22, 32) est relié par transmission avec le second élément de transmission (23, 33) par l'intermédiaire d'une transmission à étrier (25, 37), la transmission à étrier assurant un mouvement simultané et opposé des éléments de transmission.

9. Phare (10), en particulier un phare de véhicule automobile, ayant un dispositif de réglage (20) pour le pivotement d'un composant réglable (11) du phare, en particulier d'une lentille, d'un unité d'éclairage ou autres composants modeleurs de lumière du phare, selon l'une des revendications précédentes.
